# DEMANDE DE BREVET EUROPEEN

(11) **EP 0 999 715 A1**
(43) Date de publication de la demande: **10.05.2000**
(21) Numéro de dépôt: 99402735.7
(22) Date de dépôt: 04.11.1999
(51) Int. Cl.: H04Q 7/34, H04Q 3/00

(54) **Système de diagnostic pour réseaux de télécommunication ouverts**

(30) Priorité: 05.11.1998 FR 9813921
(71) Demandeur: ALCATEL, 75008 Paris (FR)
(72) Inventeur: Carrez, François, 94320 Thiais (FR)
(74) Mandataire: Lamoureux, Bernard

(57) **Abrégé**

Architecture pour le diagnostic de dysfonctionnement dans un réseau de télécommunication (T) ouvert, comportant :
- un moyen d'acquisition d'informations de gestion provenant d'un réseau de gestion des télécommunications (M) associé au réseau de télécommunication (T), et,
- un système de diagnostic (D) permettant d'élaborer des diagnostics,

L'architecture se caractérise en ce qu'elle comporte en outre un moyen d'acquisition d'informations sur des événements extérieurs influents les communications au sein dudit réseau de télécommunication ouvert, et en ce que les diagnostics sont élaborés à partir de données fournies par les deux moyens d'acquisition d'informations.

## Description

La présente invention concerne un système de diagnostic de dysfonctionnements au sein d'un réseau de télécommunication.

Actuellement, les dysfonctionnements au sein des réseaux de télécommunication sont gérés par des systèmes particuliers appelés réseaux de gestion des télécommunications (RGT) ou, en anglais, *Telecommunication* Management Network (TMN). Ces RGT sont reliés aux différents équipements formant le réseau de télécommunication afin d'échanger des informations avec ceux-ci.

Les réseaux de gestion des télécommunications sont suffisamment décrit dans de nombreux ouvrages, et nous n'entrerons pas dans le détail de leur architecture. Pour plus d'informations, on peut par exemple consulter un ouvrage tel que « *Telecommunication Networks»* de Fraidoon Mazda, aux éditions Focal Press, ou la série M.3000 de l'ITU-T (*International Telecommunication Union*).

Toutefois, les réseaux de gestion des télécommunications sont insuffisants dans certains cas pour fournir des diagnostics complets sur l'état du réseau de télécommunication qu'ils gèrent.

Ainsi, dans le cas d'un réseau de télécommunication ouvert, c'est-à-dire sur lequel peuvent influer des événements extérieurs à ce réseau, le réseau de gestion des télécommunications n'est pas à même de rendre compte des événements qui peuvent venir perturber le fonctionnement de réseau de télécommunication du fait de son caractère ouvert.

Par exemple, dans le cas d'un réseau de radiocommunication, l'influence des conditions météorologiques peut avoir une importance sur la qualité des transmissions, et donc sur la densité d'alarmes qui seront remontées depuis les équipements du réseau jusqu'au RGT. Celui-ci n'ayant que la connaissance du réseau de télécommunication à sa disposition n'est bien évidemment pas en mesure de faire un diagnostic de bonne qualité.

Il en est de même d'un embouteillage par exemple qui provoque l'accumulation dans une étendue géographique réduite d'un grand nombre d'utilisateurs de réseau cellulaire. Cette accumulation est à même de provoquer des saturations des ressources d'une ou plusieurs cellules. De la même façon que précédemment, un système de diagnostic basé uniquement sur les informations issues d'un réseau de gestion des télécommunications ne sera pas à même d'interpréter correctement ces saturations de cellules puisqu'il ne peut connaître l'existence de cet embouteillage.

Le but de la présente invention est de prendre en compte les événements extérieurs susceptibles d'influer sur le comportement du réseau de télécommunication, afin de construire un diagnostic de bonne qualité.

Par définition, on appelle événement extérieur, un événement indépendant du réseau de télécommunication, c'est-à-dire qui existerait de la même façon en l'absence du réseau.

Pour ce faire, l'invention a pour objet une architecture pour le diagnostic de dysfonctionnement dans un réseau de télécommunication ouvert, comportant :
- un moyen d'acquisition d'informations de gestion provenant d'un réseau de gestion des télécommunications associé au réseau de télécommunication, et,
- un système de diagnostic permettant d'élaborer des diagnostics,

Cette architecture se caractérise en ce qu'elle comporte, en outre, un moyen d'acquisition d'informations sur des événements extérieurs influents les communications au sein du réseau de télécommunication ouvert, et en ce que les diagnostics sont élaborés à partir de données fournies par les moyens d'acquisition d'informations.

L'invention a aussi pour objet un procédé pour le diagnostic de dysfonctionnement dans un réseau de télécommunication ouvert, comportant les étapes suivantes ;
- acquisition d'informations de gestion provenant d'un réseau de gestion des télécommunications associé au réseau de télécommunication, et,
- élaboration de diagnostics

Le procédé se caractérise en ce qu'il comporte en outre une étape d'acquisition d'informations sur des événements extérieurs influents les communications au sein du réseau de télécommunication ouvert, et en ce que les diagnostics sont élaborés à partir de données fournies par les étapes d'acquisition d'informations.

Selon certaines mises en oeuvre de l'invention, cette architecture peut comporter une ou plusieurs des caractéristiques suivantes ;
- Les informations extérieures comportent des informations provenant d'un serveur géographique, c'est-à-dire d'un serveur associé ou appartenant au réseau de télécommunication, comportant des informations de nature géographique, relatives audit réseau.
- Le serveur géographique peut fournir des informations provenant de cartes RNP.
- Les informations extérieures comportent des informations provenant du *world-wide web.*
- Le système de diagnostic dispose en outre d'une base de règles permettant d'élaborer par inférence les diagnostics.
- Le système de diagnostic dispose d'un système à logique floue pour élaborer les diagnostics.

L'invention, ses caractéristiques et ses avantages apparaîtront de façon plus claire à la lecture de la description qui suit en liaison avec la figure unique donnée à titre indicatif et nullement limitatif de l'invention. Celle-ci est une représentation schématique d'un exemple d'architecture selon l'invention.

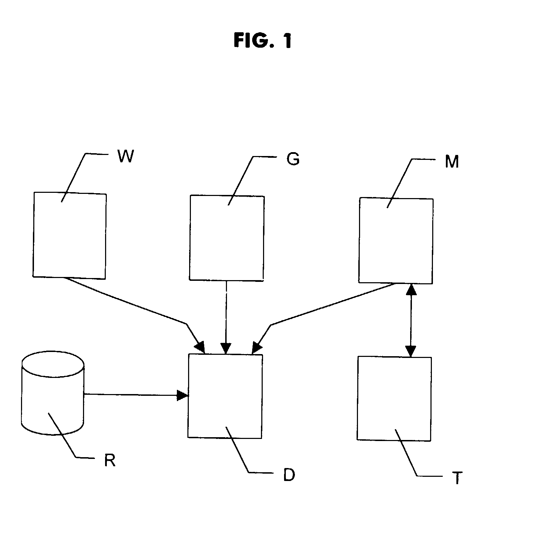

Selon la figure 1, le système de diagnostic D est relié à un réseau de gestion des télécommunications M qui est lui-même connecté à un réseau de télécommunication T. Il possède en outre des liaisons vers un ou plusieurs serveurs géographiques G et un ou plusieurs serveurs externes W.

Le ou les serveurs externes W peuvent être des sites du *world-wide web*. Ils peuvent contenir divers types d'information. On peut citer à titre d'exemples :
- Des informations sur le terrain. Par exemple, la présence d'un pont ou d'un tunnel est à même de modifier de façon substantielle la qualité des transmissions d'un réseau de radiocommunication, et même éventuellement de les interrompre. Il en est de même des zones forestières dont les feuillages peuvent gêner la propagation radio.
- Des informations sur la densité démographique. Par exemple, dans le cas d'un réseau de radiocommunication de type cellulaire, une manifestation regroupant en un même endroit un grand nombre de personnes (concert, compétition sportive, encombrement du trafic routier...) peut engendrer la saturation d'une ou de plusieurs cellules.
- Des informations sur les conditions météorologiques. Là encore, la qualité des communications peut être perturbée par les conditions météorologiques, notamment en cas de précipitation.

La référence G est un serveur géographique, qui peut faire partie du réseau de télécommunication ou bien lui être associé. Il contient des informations de nature géographique, relatives à ce réseau. Ce type de serveur n'existe que dans certains réseaux, notamment dans les réseaux de télécommunication de type cellulaire, par exemple de type GSM. Ce serveur peut alors comporter des cartes dites RNP pour *Radio Network Planning* qui sont utilisées lors du déploiement du réseau pour planifier les plans de fréquence, configurer les cellules etc. Elles permettent de déterminer pour une position géographique donnée quelle est la cellule théorique correspondante.

En tout état de cause, ce serveur géographique peut permettre de mettre en relation d'une part des données géographiques (localisation de forêts, lacs etc.) et d'autre part des données sur le réseau de télécommunication (position des stations de base, dimension des cellules etc.).

Le système de diagnostic D peut être de type système expert et avoir à sa disposition un ensemble de règles R qui lui permettent d'élaborer des diagnostics en inférant des informations apportées par le serveur géographique G et/ou par le ou les serveurs externes W d'une part, et des informations tirées du réseau de gestion des télécommunications d'autre part.

Ces règles sont par exemple de la forme suivante :
*Si P*_{*1*} *op P*_{*2*} *op... op P*_{*n*} *alors C*_{*1*} *ou C*_{*2*} *ou... C*_{*m*}

Dans laquelle « op » est un opérateur logique tel « ou » ou « et », P₁, P₂...Pₙ sont un ensemble de prémisses et C₁, C₂... Cₘ sont un ensemble de conclusions, c'est à dire de causes probables du problème diagnostiqué. Lorsque la condition logique *P*_{*1*} op *P*_{*2*} op... op *P*_{*n*} est vérifiée, le système détermine par inférence qu'au moins une des conclusions C₁, C₂...Cₘ est aussi vérifiée.

Un exemple d'une telle règle peut être :
*Si « rupture d'appel* » *et* « *usager se déplace* » *alors* « *saturation de cellule* » *ou* « *panne d'équipement* » *ou* « *canal perturbé* ».

L'application d'une telle règle permet de générer un ensemble de conclusions. Afin de déterminer le diagnostic, c'est-à-dire laquelle de ces conclusions représente la réalité, le système de diagnostic D peut rechercher les informations pertinentes auprès du ou des serveurs externes W, du réseau de gestion des télécommunications M ou/et du serveur géographique G.

Dans l'exemple de règles de ci-dessus, si les deux prémisses sont remplies, alors le système de diagnostic D doit déterminer laquelle des trois hypothèses « saturation de cellule », « panne d'équipement » ou « canal perturbé » représente la réalité.

Pour cela, il peut traiter chacune de ces hypothèses séquentiellement et rechercher pour chacune d'entre elles les informations nécessaires à sa confirmation ou infirmation.

Pour la première hypothèse (« saturation de cellule »), le système de diagnostic D peut aller chercher auprès du serveur géographique G, les informations concernant la cellule correspondant à la position de l'usager, puis auprès du réseau de gestion des télécommunications M, les informations relatives à l'état de saturation de cette cellule précise.

Si la cellule est effectivement saturée, c'est que l'hypothèse « saturation de cellule » était la bonne, et le système de diagnostic peut alors arrêter son traitement, ou bien le poursuivre en cherchant à déterminer la cause de cette saturation, en appliquant une autre règle qui a pour prémisse « saturation de cellule ».

Des hypothèses possibles sont par exemple « manifestation sportive » ou « encombrement du trafic». Tout événement susceptible de concentrer en un endroit délimité une population importante, risque en effet de provoquer une saturation de cellule.

Afin de vérifier la satisfaction de ces hypothèses, le système de diagnostic D peut faire appel à des informations issues d'un ou de plusieurs serveurs externes W. Un exemple d'un tel serveur externe peut être un site du *world-wide web.*

Dans le cas où l'hypothèse « saturation de cellule » ne serait pas vérifiée, il traite alors l'hypothèse suivante (« panne d'équipement ») qui est traitée de façon similaire pour savoir s'il s'agit de la bonne hypothèse. Par contre, cette hypothèse ne permet guère de continuer le traitement pour déterminer une cause à cette panne.

Si cette hypothèse n'est toujours pas la bonne, le système de diagnostic D passe alors à la dernière hypothèse : « canal perturbé ». Il peut alors rechercher sur un ou plusieurs serveurs externes W, des informations relatives aux conditions météorologiques. S'il apprend par exemple que des précipitations importantes avaient lieu au moment de la rupture de l'appel, il peut en déduire que c'est là la cause réelle du problème.

Une autre mise en oeuvre possible du système de diagnostic D consiste à utiliser un système à logique floue.

## Revendications

1. Architecture pour le diagnostic de dysfonctionnement dans un réseau de télécommunication (T) ouvert comportant :
• un moyen d'acquisition d'informations de gestion provenant d'un réseau de gestion des télécommunications (M) associé audit réseau de télécommunication (T), et,
• un système de diagnostic (D) permettant d'élaborer des diagnostics,
caractérisée en ce qu'elle comporte en outre un moyen d'acquisition d'informations sur des événements extérieurs influents les communications au sein dudit réseau de télécommunication ouvert, et en ce que lesdits diagnostics sont élaborés à partir de données fournies par lesdits moyens d'acquisition d'informations.

2. Architecture selon la revendication précédente, caractérisée en ce que lesdites informations extérieures comportent des informations provenant d'un serveur géographique (G).

3. Architecture selon la revendication précédente, caractérisée en ce que ledit serveur géographique (G) peut fournir des données issues de cartes RNP.

4. Architecture selon l'une des revendications précédentes, caractérisé en ce que lesdites informations extérieures comportent des informations provenant d'un site du *world-wide web* (W).

5. Architecture selon l'une des revendications précédentes, caractérisée en ce que le système de diagnostic dispose en outre d'une base de règles (R) permettant d'élaborer par inférence lesdits diagnostics.

6. Architecture selon l'une des revendications 1 à 4, caractérisée en ce que le système de diagnostic dispose d'un système à logique floue pour élaborer lesdits diagnostics.

7. Procédé pour le diagnostic de dysfonctionnement dans un réseau de télécommunication (T) ouvert, comportant les étapes suivantes :
• acquisition d'informations de gestion provenant d'un réseau de gestion des télécommunications (M) associé audit réseau de télécommunication (T), et,
• élaboration de diagnostics
caractérisé en ce qu'il comporte en outre une étape d'acquisition d'informations sur des événements extérieurs influents les communications au sein dudit réseau de télécommunication ouvert, et en ce que lesdits diagnostics sont élaborés à partir de données fournies par les étapes d'acquisition d'informations.

8. Procédé selon la revendication précédente, caractérisé en ce que lesdites informations extérieures comportent des informations provenant d'un serveur géographique (G).

9. Procédé selon la revendication précédente, caractérisé en ce que ledit serveur géographique (G) peut fournir des données issues de cartes RNP.

10. Procédé selon l'une des revendications 7 à 9, caractérisé en ce que lesdites informations extérieures comportent des informations provenant d'un site du *world-wide web* (W).

11. Procédé selon l'une des revendications 7 à 10, caractérisé en ce que le système de diagnostic dispose en outre d'une base de règles (R) permettant d'élaborer par inférence lesdits diagnostics.

12. Procédé selon l'une des revendications 7 à 10, caractérisé en ce que le système de diagnostic dispose d'un système à logique floue pour élaborer lesdits diagnostics.
